Europäisches Patentamt

European Patent Office

Office européen des brevets

(11) Numéro de publication: **0 407 306 A1**

## (12) DEMANDE DE BREVET EUROPEEN

(21) Numéro de dépôt: 90401955.1

(22) Date de dépôt: 05.07.90

(51) Int. Cl.5: **B60D 1/155**, F16C 3/035, F16C 29/04

(30) Priorité: 05.07.89 FR 8909038

(43) Date de publication de la demande:
09.01.91 Bulletin 91/02

(84) Etats contractants désignés:
AT BE CH DE DK ES FR GB GR IT LI LU NL SE

(71) Demandeur: S.E.S.R. - SOCIETE EUROPEENNE DE SEMI-REMORQUES
44, rue François 1er
F-75008 Paris(FR)

(72) Inventeur: **Petit, Léon**
44 Boulevard Vauban
F-89000 Auxerre(FR)

(74) Mandataire: **Kügele, Bernhard et al**
NOVAPAT FRANCE 63 bis, boulevard Bessières
F-75017 Paris(FR)

(54) Dispositif téléscopique des systèmes d'accouplement mettant en oeuvre un tel dispositif téléscopique.

(57) La présente invention a pour objet un dispositif constitué par une chambre rigide (2) tubulaire dans laquelle coulisse actuellement un chariot mobile (1). Le guidage du chariot mobile et son positionnement transversal est assuré par des galets mobiles (5, 6) ainsi que par des galets fixes (3, 4).

Applications : Systèmes d'accouplement extensibles permettant d'ajuster la distance entre deux véhicules accouplés en fonction d'un angle de rotation.

### Fig. 1

# DISPOSITIF TELESCOPIQUE DES SYSTEMES D'ACCOUPLEMENT METTANT EN OEUVRE UN TEL DISPOSITIF TELESCOPIQUE

La présente invention concerne un dispositif constitué par une chambre tubulaire rigide dans laquelle coulisse axialement un chariot mobile, des moyens de guidage assurant le positionnement transversal de ce chariot mobile. De tels dispositifs sont mis en oeuvre dans de très nombreux systèmes mécaniques, et en particulier dans le secteur technique relevant de l'activité de la demanderesse qui est celui de la construction de remorques et de semi-remorques.

Le problème que l'invention vise à résoudre est d'assurer le guidage d'un chariot mobile à l'intérieur d'une chambre tubulaire rigide, de façon à minimiser les frottements, sans pour autant introduire de jeu transversal. Le positionnement transversal du chariot mobile doit être assuré de façon précise, même lorsque des efforts et des contraintes importantes s'exercent sur lui.

Les différents moyens de guidage connus dans l'état de la technique n'apportent pas totalement satisfaction. La plupart sont d'une grande complexité, ce qui diminue leur fiabilité et augmente le prix de fabrication. D'autres systèmes plus simples ne sont efficaces que pendant une durée de vie limitée, après laquelle l'usure des différentes pièces mises en oeuvre introduit un jeu inacceptable.

L'objet de la présente invention est de fournir un dispositif remédiant à ces inconvénients. La présente invention consiste plus particulièrement en un dispositif constitué par une chambre tubulaire rigide dans laquelle coulisse axialement un chariot mobile, le dispositif comportant des moyens de guidage du chariot mobile constitués par au moins une première série de roulettes fixes et par au moins une deuxième série de roulettes mobiles, ainsi que des moyens élastiques agissant sur une roulette mobile de façon à ce que ces dernières exercent une force transversale sur le chariot mobile d'une part et sur la chambre tubulaire d'autre part, la résultante des forces exercées par lesdites roulettes sur le chariot mobile étant nulle. Les roulettes mobiles assurent ainsi un rattrapage automatique du jeu provenant tant des contraintes et des efforts extérieurs que de l'usure des éléments constitutifs du dispositif.

Selon un premier mode de réalisation, les moyens de guidage sont constitués par au moins une première série de galets libres en rotation autour d'un axe perpendiculaire à l'axe longitudinal de la chambre rigide, l'axe de rotation dudit galet étant maintenu par un support fixe solidaire du chariot mobile. Les moyens de guidage sont en outre assurés par au moins une deuxième série de galets libres en rotation autour d'axes perpendiculaires à l'axe longitudinal de la chambre rigide, ces axes étant maintenus par un bras articulé solidaire du chariot mobile.

Selon un deuxième mode de réalisation, les deux séries de galets libres en rotation sont solidaires de la chambre tubulaire.

Les galets libres en rotation permettent d'assurer un positionnement transversal précis du chariot mobile et ils n'opposent qu'une très faible résistance au déplacement axial dudit chariot. Bien entendu, dans ce qui suit, on assimilera à des "galets" toutes pièces présentant une symétrie de rotation, et en particulier des rouleaux, des pièces coniques, des roues, des sphères etc..

Selon un mode de réalisation préféré, le bras articulé est solidaire de la chambre ou du chariot mobile par l'intermédiaire d'un pivot sensiblement parallèle à l'axe de rotation du galet. Un moyen élastique exerce sur le bras articulé une force tendant à écarter le galet mobile de la paroi de la chambre ou du chariot muni dudit pivot.

De préférence, le moyen élastique est constitué par un bloc déformable élastiquement, disposé entre le chariot mobile et le bras articulé. Ce bloc déformable est avantageusement constitué par un élastomère et il comporte au moins une buté franche limitant le pivotement dudit bras articulé, et donc le jeu latéral du chariot mobile à l'intérieur de la chambre

Selon un mode de réalisation avantageux, le chariot mobile comporte, en deux points diamétralement opposés, un galet fixe et un galet mobile. La présente invention concerne en particulier un système d'accouplement de deux véhicules comportant une cage tubulaire solidaire du chassis d'un des véhicules, munie d'un chariot mobile coulissant à l'intérieur de ladite cage tubulaire. Le chariot mobile comporte à son extrémité avant un moyen d'accrochage à un organe complémentaire solidaire de l'autre véhicule. Les moyens de guidage du chariot mobile sont conformes aux moyens de guidage précédemment exposés. Un vérin hydraulique prend appui d'une part sur un élément solidaire de la cage tubulaire et d'autre part sur le chariot mobile. Ce vérin hydraulique assure le déplacement longitudinal du chariot mobile, et par conséquent définit l'extension du système d'accouplement. Le principe général de tels systèmes d'accouplement est connu de l'homme du métier qui pourra en particulier se référer à la demande de brevet européen N° 0 176442 déposée le 23 septembre 1985 sous le N° 85401842.1.

Selon un mode de réalisation avantageux, la cage tubulaire comporte au moins un orifice, le chariot mobile comportant également un orifice. Ces orifices sont en regard lorsque le système d'accouplement est en position d'extension. Une pièce de blocage de section sensiblement identique à la section desdits orifices peut être introduite dans ces orifices pour empêcher le déplacement du chariot mobile, en particulier lors d'une panne du système hydraulique ou électrique du système de réglage de la distance entre les deux véhicules accouplés.

La présente invention sera mieux comprise à partir de la description qui suit, exposant un exemple non limitatif de réalisation de la présente invention. Cette description s'appuiera sur les dessins où :

- la figure 1 représente une vue en coupe médiane du dispositif ;
- la figure 2 représente une vue en coupe transversale du dispositif ;
- la figure 3 représente une vue en coupe longitudinale d'un système d'accouplement.

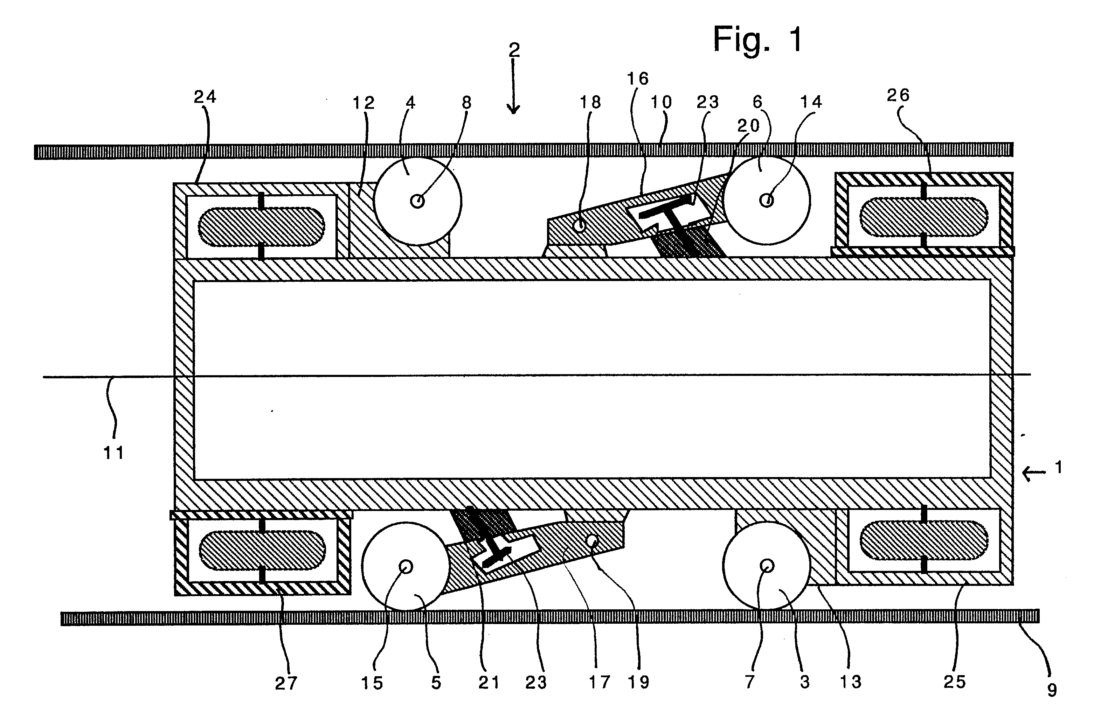

La figure 1 représente une coupe schématique d'un chariot (1) mobile à l'intérieur d'une cage tubulaire (2). La cage tubulaire (2) présente une section rectangulaire. Le chariot mobile (1) comporte une première série de galets latéraux (3, 4) et une deuxième série de galets latéraux (5, 6). Les galets (3, 4) sont des galets fixes montés sur des axes de rotation (7, 8) autour desquels ils peuvent tourner librement. Ces axes de rotation (7, 8) sont parallèles aux parois (9, 10) de la cage tubulaire (2), et perpendiculaires à un axe longitudinal (11). Les axes de rotation (7, 8) sont fixés sur des supports respectivement (12, 13) fixés de façon rigide sur le chariot mobile (1). Les galets (5, 6) de la deuxième série sont montés sur des axes (14, 15) autour desquels ils peuvent tourner librement. Ces axes (14, 15) sont également parallèles aux parois latérales (9, 10) de la cage tubulaire (2) et perpendiculaires à l'axe longitudinal (11). Les axes (14, 15) sont fixés sur un bras articulé respectivement (16, 17). Ces bras articulés (16, 17) peuvent pivoter autour de pivots respectivement (18, 19) solidaire du chariot mobile (1). Un bloc de matière élastomère (20, 21) est interposé entre le chariot mobile (1) et le bras articulé (16, 17). Ces blocs élastomères (20, 21) exercent sur les bras articulés (16, 17) une force tendant à écarter les galets mobiles (5, 6) du chariot mobile (1), et donc à assurer un bon contact de ces galets (5, 6) avec les parois latérales (9, 10) de la chambre tubulaire (2). Des butées fixes (22, 23) limitent le débattement des bras articulés. Ces butées fixes (22, 23) sont constituées par un élément cylindrique terminé par une tête de dimension supérieure.

Bien entendu, on retrouve dans le plan de coupe perpendiculaire à celui représenté sur la figure 1, une première série de galets fixes et une deuxième série de galets mobiles soutenus par un bras articulé. Pour des raisons de simplification, ces galets fixes (3, 4) et ces galets mobiles (5, 6) ont été représentés de façon schématique.

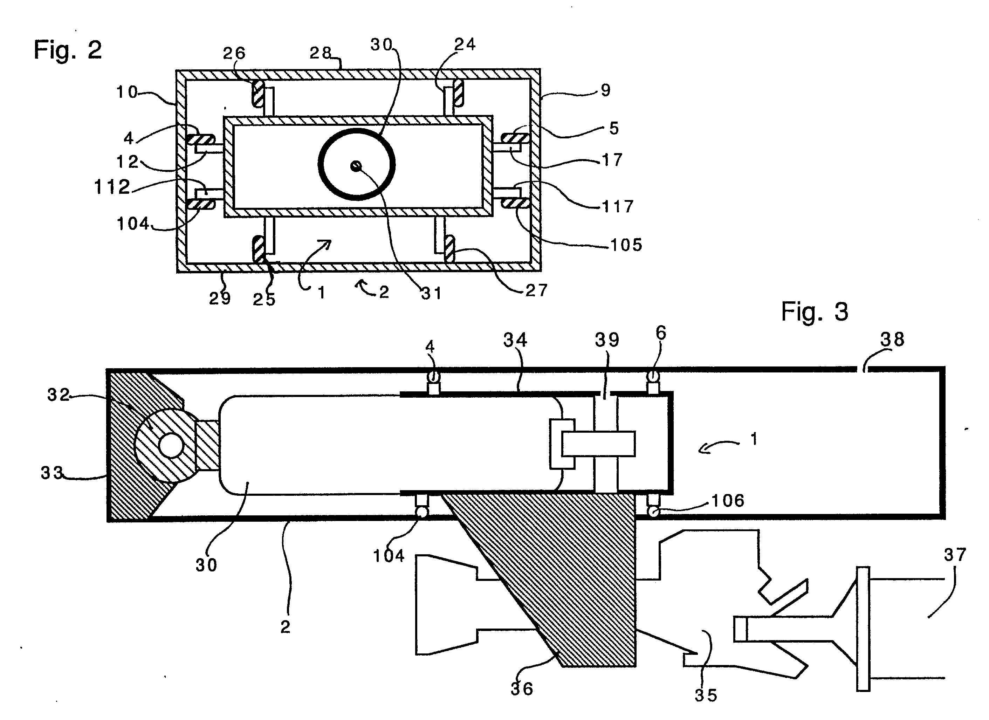

La figure 2 représente une vue en coupe transversale du dispositif précédemment décrit. La cage tubulaire comporte deux faces latérales (9, 10) opposées ainsi que deux faces latérales (28, 29) opposées. Sur chaque faces latérales (9, 10, 28, 29) s'appuient des paires de galets respectivement (5 et 105, 4 et 104, 26 et 24, 25 et 27). Au centre du chariot mobile (1) se trouve un vérin hydraulique (30) muni d'un piston et d'une tige (31).

La figure 3 représente un dispositif d'accouplement de deux véhicules. La chambre tubulaire (2) comporte un vérin (30) fixé d'une part sur la face arrière (33) de la chambre tubulaire (2) et d'autre part sur la partie avant (34) du chariot mobile (1).

Le crochet d'attelage (35) est solidarisé avec le chariot mobile (1) par l'intermédiaire d'une pièce de raccordement (36). Le crochet d'accrochage (35) coopère, de façon classique, avec un timon (37). Bien entendu, il est possible, sans sortir du cadre de la présente invention, de fixer le crocher d'accouplement sur le chariot mobile (1), ou encore de constituer ce chariot mobile (1) en timon pouvant coopérer avec un crochet d'accrochage fixe solidaire du châssis de l'autre véhicule.

Le chariot mobile (1) peut être bloqué en position avant, c'est-à dire en position d'extension maximale du système d'accouplement, par l'intermédiaire d'une broche traversant l'orifice (38) pratiqué dans la chambre tubulaire et l'orifice (39) pratiqué dans le chariot mobile (1).

La présente invention a été décrite dans ce qui précède à titre d'exemple non limitatif. Il est bien entendu que l'homme du métier sera à même de réaliser de nombreuses variantes relevant du même concept et de la même invention, sans pour autant sortir du cadre du présent brevet.

**Revendications**

1 - Dispositif constitué par une chambre tubulaire rigide dans laquelle coulisse axialement un chariot mobile, ledit dispositif comportant des moyens de guidage du chariot mobile assurant le positionnement transversal dudit chariot mobile, caractérisé en ce que les moyens de guidage sont constitués par au moins une première série de roulettes fixes (3, 4) et par au moins une deuxième série de roulettes mobiles (5, 6), des moyens élastiques (20, 21) agissant sur les roulettes mobiles de façon à ce que ces dernières exercent une force transversale sur le chariot mobile (1) d'une part et sur la chambre tubulaire (2) d'autre part, la résultante des forces exercées par lesdites roulettes sur le chariot mobile (1) étant nulle.

2 - Dispositif selon la revendication 1, caractérisé en ce que les moyens de guidage sont constitués par au moins une première série de galets (3, 4) libres en rotation autour d'un axe (7, 8) perpendiculaire à l'axe longitudinal (11) de la chambre rigide (2), l'axe de rotation (7, 8) dudit galet (3, 4) étant maintenu par un support (12, 13) fixe, solidaire du chariot mobile (1) et par au moins une deuxième série de galets (5, 6) libres en rotation autour d'axes (14, 15) perpendiculaires à l'axe longitudinal (11) de la chambre rigide (2), ces axes (14, 15) étant maintenus par des bras articulés (16, 17) solidaires du chariot mobile (1).

3 - Dispositif selon la revendication 1, caractérisé en ce que les moyens de guidage sont constitués par au moins une première série de galets (3, 4) libres en rotation autour d'un axe (7, 8) perpendiculaire à l'axe longitudinal (11) de la chambre rigide (2), l'axe de rotation dudit galet (3, 4) étant maintenu par un support fixe solidaire de la chambre tubulaire (2), et par au moins une deuxième série de galets (5, 6) libres en rotation autour d'axes (14, 15) libres en rotation autour d'axes perpendiculaires à l'axe longitudinal (11) de la chambre rigide (2), maintenus par un bras articulé (16, 17) solidaire de la chambre tubulaire (2).

4 - Dispositif selon l'une quelconque des revendications 2 à 3, caractérisé en ce que le bras articulé (16, 17) est solidaire de la chambre (2) ou du chariot (1) par l'intermédiaire d'un pivot (18, 19) sensiblement parallèle à l'axe de rotation (14, 15) du galet (5, 6) et en ce qu'un moyen élastique (20, 21) exerce sur le bras articulé (16, 17) une force tendant à écarter le galet mobile (5, 6) de la paroi (9, 10) de la chambre (2) ou du chariot (1) muni dudit pivot (18, 19).

5 - Dispositif selon la revendication 4, caractérisé en ce que le moyen élastique (20, 21) est constitué par un bloc déformable élastique, ledit bloc étant disposé entre le chariot mobile (1) ou la paroi de la chambre tubulaire (2), et ledit bras articulé (16, 17).

6 - Dispositif selon la revendication 5, caractérisé en ce que le bloc déformable élastiquement est constitué par un élastomère.

7 - Dispositif selon l'une quelconque des revendications 4 à 6, caractérisé en ce qu'il comporte en outre au moins une butée franche (22, 23) limitant le débattement du bras articulé (16, 17).

8 - Dispositif selon l'une quelconque des revendications 1 à 7, caractérisé en ce qu'il comporte en deux points diamétralement opposés un galet fixe et un galet mobile.

9 - Système d'accouplement de deux véhicules, caractérisé en ce qu'il comporte une cage tubulaire (2) solidaire du chassis d'un des véhicules, muni d'un chariot mobile (1) coulissant à l'intérieur de ladite cage tubulaire (2), le chariot mobile comportant un moyen d'accrochage (35) pouvant coopérer avec un organe (37) complémentaire, solidaire de l'autre véhicule, les moyens de guidage du chariot mobile (1) étant conformes à l'une quelconque des revendications précédentes, le système d'accouplement étant en outre caractérisé par le fait qu'un vérin hydraulique (30) prend appui d'une part sur un élément solidaire de la cage tubulaire (2) et d'autre part sur le chariot mobile (1), de façon à assurer le déplacement dudit chariot mobile (1).

10 - Système d'accouplement selon la revendication 9, caractérisé en ce que la cage tubulaire (2) comporte au moins un orifice (38) et en ce que le chariot mobile comporte au moins un orifice (39), lesdits orifices (38, 39) se trouvant en regard lorsque le système d'accouplement est en position d'extension, le dispositif est en outre caractérisé par le fait qu'il comporte une pièce de blocage dont la section correspond sensiblement à la section desdits orifices (38, 39), ladite pièce de blocage pouvant être introduite dans lesdits orifices pour assurer le blocage du déplacement du chariot mobile (1).

Fig. 1

EP 0 407 306 A1

Fig. 2

Fig. 3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | GB-A-2 203 199 (HEPCO SLIDE SYSTEMS LTD.) <br> * page 4, ligne 4 - page 5, ligne 15; figures 4,7 * | 1 | B 60 D 1/155 <br> F 16 C 3/035 <br> F 16 C 29/04 |
| A | | 9 | |
| Y | US-A-3 407 011 (H.R. ZEIDLER) <br> * colonne 5, lignes 8-48; figures 10,11 * | 1 | |
| A | | 2,3 | |
| A | DE-A-3 004 591 (H. MUELLER) | | |
| A | LU-A- 56 539 (GOEHLFENNEN & SPICKA GMBH) | | |
| A | DE-C- 924 721 (E. GOELZ) | | |

DOMAINES TECHNIQUES
RECHERCHES (Int. Cl.5)

F 16 C
B 60 D

Le présent rapport a été établi pour toutes les revendications

| Lieu de la recherche | Date d'achèvement de la recherche | Examinateur |
|---|---|---|
| BERLIN | 21-08-1990 | HOFFMANN M.P. |

EPO FORM 1503 03.82 (P0402)